Europäisches Patentamt

European Patent Office

Office européen des brevets.

(19)

(11) Publication number: **0 322 145**
**A2**

(12) **EUROPEAN PATENT APPLICATION**

(21) Application number: 88311771.5

(22) Date of filing: 13.12.88

(51) Int. Cl.⁴: **B29C 43/22 , B29C 43/52 ,**
**//B29L7:00**

(30) Priority: 22.12.87 GB 8729922 .

(43) Date of publication of application:
28.06.89 Bulletin 89/26

(84) Designated Contracting States:
DE FR GB IT NL

(71) Applicant: Emhart Materials UK Limited
39 The Parade Lyn House
Oadby Leicester LE2 5BB(GB)

(84) GB

Applicant: EMHART INDUSTRIES, INC.
426 Colt Highway
Farmington Connecticut 06032(US)

(84) DE FR IT NL

(72) Inventor: Greatorex, Anthony Thomas
Rutland House 1068 Melton Road
Syston Leicester(GB)
Inventor: Thompson, David Alan
119 Heathcote Drive Sileby
Loughborough Leicestershire(GB)

(74) Representative: Stagg, Diana Christine et al
Emhart Patents Department Lyn House 39
The Parade
Oadby Leicester LE2 5BB(GB)

(54) Apparatus for controlling the thickness of heat-softenable sheet material.

(57) Apparatus for precisely controlling the thickness
of a heat-softenable sheet material 52 by heating the
material to bring it to a softened condition, com-
pressing the material whilst in the softened condition
to the desired thickness or somewhat less and then
cooling the material to a temperature below its soft-
ening point so that it sets whilst precisely maintained
at the desired thickness, wherein the material is
heated in a heating zone 12 and cooled in a cooling
zone 14, the zones being defined on one side by a
single, driven endless belt 18 and on the other side
by stationary confining means 18.

The stationary confining means may take the
form of a second, stationary endless belt.

Fig_1

# APPARATUS FOR CONTROLLING THE THICKNESS OF HEAT-SOFTENABLE SHEET MATERIAL

This invention relates to apparatus for the precision control of the gauge or thickness of a heat-softenable sheet material.

Heat-softenable sheet material, to which this invention relates, comprises material which when heated may be brought to a condition where it is soft and pliable and may also be compressed. The melt characteristics of the material are used to provide the control of thickness, so the material must have a thermoplastic component which allows the material to soften and become pliable on heating and which allows it to be compressed. Heat-softenable sheet materials most commonly comprise non-woven material produced according to conventional non-woven techniques wherein the fibres are formed into a batt and subsequently impregnated with a thermoplastic binder composition. Such heat-softenable sheet materials are described in greater detail in our co-pending European patent application 204,482.

Heat softenable sheet materials of this kind generally have a somewhat uneven gauge when measurements of thickness are taken across a sample sheet.

In our co-pending European patent application 204,482 is described a process for precision controlling the thickness of a sheet of heat-softenable material by heating the material to bring it to a softened condition, compressing the material while in the softened condition to the desired thickness and cooling the material below its softening point whilst maintaining the desired thickness, which is characterised in that said sheet material is passed continuously through a passage through a heated zone wherein the material passing through is softened. the thickness of the softened material being controlled so that it exits from the heated zone at the desired thickness or at somewhat less to pass through a cooling zone wherein the material passing through is set whilst precisely maintained at the desired thickness.

By means of this process, not only is the variation in the thickness of the heat-softenable material reduced as compared with to material produced according to conventional methods, but also the thickness of the material may be fairly accurately predetermined.

This precise thickness control is achieved by heating the heat-softenable material to a temperature above its softening point, then compressing it whilst it is in a heat-softened condition, and then cooling it to a temperature below its softening point before it recovers from the reduced thickness to which it has been compressed. The final thickness of the material is determined by the depth of the passage through the cooling zone. If the depth of the passage through the cooling zone is slightly greater than the gauge to which the heat-softened material has been compressed in the heated zone, the material will expand to take up any space between the second pair of plates while it is still soft; it will be set at this thickness as it is cooled to a temperature below its softening point before it leaves the cooling zone so that there is substantially no recovery. In this process, therefore, it is important to ensure that the material is cooled below its softening point before it has a chance to recover from its compressed state and the cooling stage of the process is preferably carried out as soon as possible after the heating stage of the process. The extent to which the heat-softenable material may be compressed largely depends on its density and thermoplasticity. It is important to ensure that in both the heated and cooling zones of the process, the sample reaches the desired optimum temperature throughout its entire thickness. It is also important to ensure that the material has sufficient time in the heated zone to soften enough to ensure that the fibres can accommodate the position in which they are desired to be set in the final product. In addition, the heat-softenable material should preferably not be pressed before it is fully softened throughout its thickness, or else some parts of the material will be pressed to a greater extent than others.

The material is preferably equally heated on both sides, for example by pairs of opposing heating plates, and may then be passed through a tapering section in which the material is compressed as the passage between the surfaces between which it passes decreases in depth; it then passes before it has a chance to recover into a cooling zone. Preferably, too, the material is cooled on both sides to accelerate the cooling process and to ensure that the sample has been cooled below its softening point throughout its entire thickness. The material, on leaving the cooling zone, is sufficiently cool that there will be substantially no recovery from its compressed state and the thickness of the material will correspond to the predetermined thickness as set in the cooling zone.

European patent application 204,482 also describes and claims an apparatus for carrying out the process in which the sheet material is forwarded by engagement between a pair of endless belts and passed through a passage between a first pair of plates provided with heating means and a second pair of plates provided with cooling means, said first pair of plates being held rigidly with a separation at the parallel exit edges equal to or somewhat less than the thickness desired for the sheet material and said second pair of plates being held rigidly parallel with a separation equal to the desired thickness, whereby in operation said first of plates define a passage through a heated zone wherein the material passing through is softened and said second pair of plates define a passage through a cooling zone wherein the material passing through is set whilst precisely maintained at the desired thickness.

Sheet material produced using the apparatus claimed in European patent application 204,482 has improved gauge uniformity but for some very demanding applications there is some variation in surface finish caused by surface variations of the endless belts.

It is accordingly an object of the present invention to improve the apparatus of European patent 204,482 in order to produce heat-softenable sheet materials of improved surface finish.

It has been found that surface variation of heat softenable sheet materials is significantly reduced if the sheet material is forwarded by a single endless belt successively through a heated zone having an exit depth equal to or somewhat less than the thickness desired for the sheet material and a cooling zone having a depth equal to the desired thickness, characterised in that said heating zones and said cooling zone are defined on one side by said single, driven endless belt and on the other side by stationary confining means.

Said stationary confining means may take the form of a second stationary endless belt, stationary lengths of support belt material which may be held against platens or even by platens as such.

The support belt material may be fed from a reel located upstream so that the support surface can readily be renewed after unacceptable wear.

The arrangement and operation of the apparatus is otherwise largely similar to that of the apparatus described in European Patent Application 204,482.

Whilst heat softenable material which has passed through an apparatus according to the invention has a high uniformity of gauge, the slight sheer caused by the passage of the sheet material across the stationary side of the heating and cooling zones tends to even out surface variations so that the surface of the sheet material has an improved quality and surface uniformity. Examples of materials suitable for use to provide belts in a belt arrangement according to the invention include glass fibre/KEVLAR (RTM) belts or steel mesh belts. Each of these may be covered with a coating of PTFE to reduce wear of the actual belt itself; the PTFE coating also provides a so-called 'non-stick' coating which will reduce any tendency for the heat-softenable material being processed to stick to the belts. The strength and other properties of such belts enable very thin belts to be used, providing excellent thermal performance and also allowing the bulk of the apparatus, and hence the cost, to be reduced as smaller guiding and drive rollers may be used than in conventional pressing apparatus using heavy steel belts which require large rollers around which to pass.

Advantage may be taken of their properties to use different materials for the single endless belt and for the stationary confining means. For example, good results are obtained using an endless belt of glass fibre/KEVLAR (RTM) material and stationary confining means comprising close-weave steel mesh. Alternatively, using an driven endless belt of steel mesh and using glass fibre/KEVLAR as the stationary surface in the treatment zones, can be arranged to provide a better grip on the sheet material. It is thus possible to provide for different levels of surface sheer of the sheet material being processed.

The heated zone in apparatus according to the invention preferably comprises opposing heating plates arranged so that both sides of the heat-softenable material may be equally heated. It may, however, be desired to heat the plates unequally so that the smoothing, compressing and densifying effect achieved by compressing the material in its heat-softened state applies more to one side than the other. This can be used to control the surface finish of the material.

The material may be heated to bring it to a heat-softened condition from room temperature or alternatively, apparatus according to the invention may be so positioned that heat-softenable material passes immediately into the apparatus after leaving the final process stage of its production process. In this latter case, the material may well be at an elevated temperature (e.g. of the order of $140°C$) and so require only a very small amount of heat to bring it to a suitable heat-softened state ready for compressing. The passage through the heated zone may further comprise a tapering section comprising two opposing surfaces at least one of which is inclined to the central longitudinal axis passing between the surfaces whereby the material is compressed as it passes therethrough. Preferably both surfaces are inclined to each other so that the material is compressed equally on each side. The tapering section may be provided by an insulating section between the heated and cooling zones which compresses the material which is maintained in a heat-softened condition whilst in the insulating section. Preferably, however, the first pair of heated plates provide the tapering section. Conveniently the heated plates are arranged to taper continuously between the entry to the passage between said heated plates and the exit therefrom. Optionally, where the heated plates provide the tapering section of the passage, the heated zone may further comprise an additional pair of heated plates disposed in substantially parallel arrangement adjacent said first pair of heated plates. This additional pair of heated plates may be disposed after the first pair of heated plates and having parallel surfaces spaced at a distance apart equal to the intended thickness of the compressed, heat-softened the material. The passage of the compressed material in its heat-softened state through this additional pair of heated plates can add to the further control of the gauge of the final product. Alternatively or additionally, there may be a pre-heating section prior to the tapering section comprising parallel heating plates arranged to heat the heat-softenable material before it is passed between said first pair of heated plates. The softened material may exit from the heated zone at the desired thickness of the material. The material is maintained at this thickness whilst passing into the cooling section which is also set to the same gauge i.e. the desired thickness of the material. Alternatively, the softened material may exit from the heated zone at somewhat less than the desired thickness. This allows the material to recover slightly from its compressed state, which may release some internal pressure, but is not sufficient to allow any unevenness in the gauge in the final product, and, in many cases, the surface finish of the final product is improved.

The cooling zone comprises a substantially parallel pair of cooling plates which are arranged to reduce the temperature of the material below its softening point. The driven belt of a belt arrangement bears against one of the cooling plates as it passes through the apparatus and the stationary confining means contacts the other cooling plate. The second pair of plates of the cooling zone are arranged to be substantially parallel and are rigidly located with a separation equal to the desired thickness of the material. The length of the cooling section must be sufficient to reduce the temperature of the heat-softenable material below its softening point throughout its entire thickness. When the temperature of the material is below its softening point, it does not recover to any significant extent from the thickness to which it has been set and is hence maintained at this preset gauge. The cooling zone may be arranged to cool the material to any desired temperature below its softening point. For example, it may be cooled substantially by using water as the cooling fluid so that it may be wound onto a roll for storage or it may be cooled only slightly (e.g. to 150°C) to be at the same temperature as a material coming out of the final stage of its production process.

The belt and the stationary confining means are arranged to bear against the heating and cooling plates of the heating and cooling sections respectively to make the heating and cooling processes as efficient as possible. In order to reduce wear a coating of a wear resistant material may be provided on these elements.

A wide range of temperatures may be employed in the present invention. The operating temperatures are governed by the softening point of the material since it is desired to ensure that the entire body of heat-softenable material passing through the heated zone is heated to a temperature above its softening point and to ensure that the cooling zone is cooled to a temperature below the softening point of the sample. It is important to ensure that the heating and cooling processes heat and cool respectively the entire thickness of the material. Where non-woven material used in the manufacture of footwear, e.g. shoe lining material or insole material, is treated in apparatus according to the invention, temperatures in the range 180°C to 240°C are used, although they may be higher or lower as determined by the softening point of the materials desired to be gauged. The first pair of plates is heated by conventional heating methods to any particular desired temperature; preferably heat transfer oil is employed. The second pair of plates are cooled by conventional cooling methods, for example a cooling liquid e.g. water, to a predetermined temperature. The rate at which heat-softenable material may be processed by the invention may be varied as desired. The rate depends on the length of the heated and cooling zones; longer zones allow a faster throughput rate. The rate at which the material is processed in accordance with invention will also depend on the thickness of the material as the material must be heat-softened throughout its thickness. Material initially of a thickness greater than 10mm will not normally be gauged to such an accurate degree as material of a smaller thickness, in the range 0.5 to 5mm, for example.

Preferred embodiments of the invention will now be described in greater detail by way of example with reference to the accompanying drawings in which:

Figure 1 is a diagrammatic section of a sheet gauging apparatus comprising a single driven endless belt and a stationary endless belt;

Figure 2 is a diagrammatic side view of the apparatus of Figure 1 in which the stationary belt is replaced by a stationary length of support belt material replenished from a reel; and

Figure 3 is a diagrammatic side view of the apparatus of Figure 1 in which the stationary belt is replaced by a smooth platen.

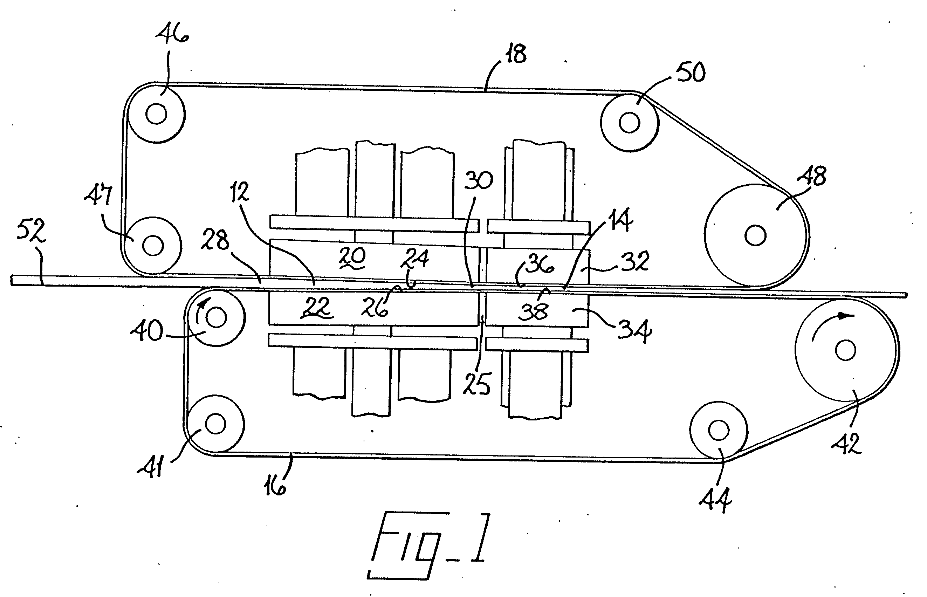

The apparatus illustrated in all three Figures comprises a heated zone 12 and a cooling zone 14 and an endless belt 16. Heated zone 12 comprises two adjustable opposing heating platens 20,22, each having a heating surface 24,26 respectively. The passage between the heating surfaces 24,26 is arranged to taper from inlet 28 of the heated zone to outlet 30 thereof. The separation between the heating surfaces at inlet 28 is 1.2mm and at outlet 30 is 0.6mm. The cooling zone comprises two adjustable opposing cooling platens 32,34, each having a cooling surface 36,38 respectively. The cooling surfaces 36,38 are arranged to be parallel and are spaced at a distance of 0.6mm apart. An insulating portion 25, comprising SYNDANIO (RTM) board, is located between the heated zone 12 and the cooling zone 14; it is set to provide a passage having the same gauge as the outlet 30 of the heating section 12 and is intended to ensure both that heat is not transferred between the heated zone 12 and the cooling zone 14 and that the material is not allowed to recover from the thickness which it reaches at outlet 30. The endless belt 16, is a TYGAFLOR (RTM) belt, made of glass fibre and KELVAR (RTM) with a PTFE coating. (Available from Fothergill & Harvey plc, Littleborough, Lancashire, England.) Belt 16 passes around two guiding rollers 40,41 and a drive roller 42 and is arranged to bear against a tensioning roller 44. The path of belt 16 is arranged so that the inside surface of the belt bears against heating surface 24 of heating platen 20 and against cooling surface 36 of cooling platen 32. In Figure 1, belt 18 (which is stationary in operation) is a similar TYGAFLOR (RTM) belt, passing around locating rollers 46, 47, 48 and tensioning roller 50. The belt 18 is arranged so that the inside surface of the belt contacts heating surface 26 and cooling surface 38. Belts 16,18, because of their thickness, have a low heat capacity so that heat from heated zone 12 is quickly transferred to a sheet of material inserted between the belts 16,18 and rapidly removed from the sheet of material in the cooling zone.

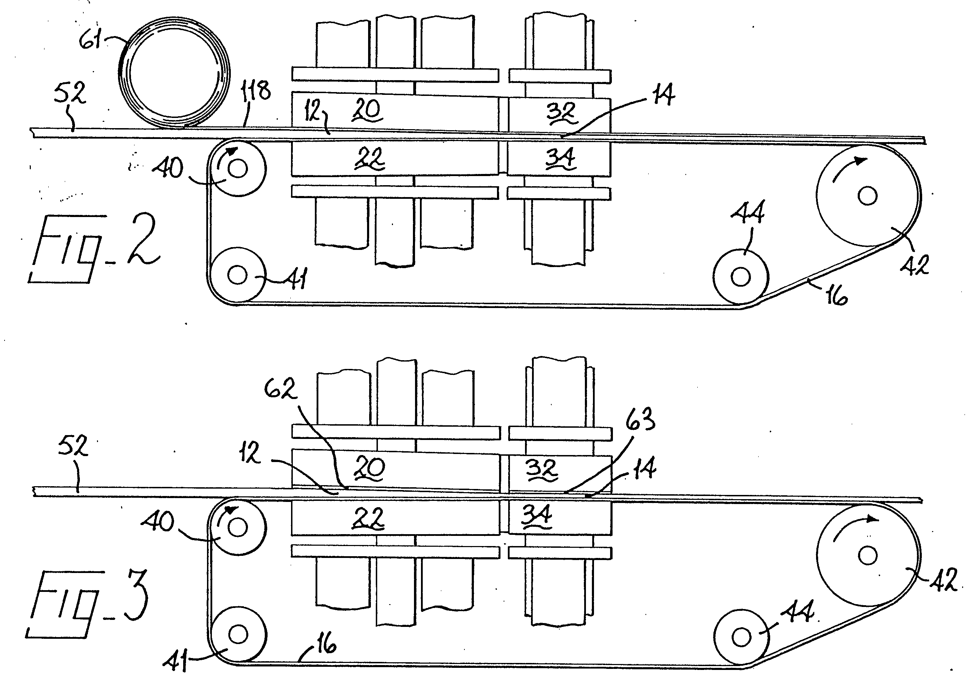

In Figure 2, the upper face of the treatment zones is provided by a band 118 of TYGAFLOR (RTM), fed spasmodically from a reel 61. Band 118 is held stationary during operation of the press, but as it becomes worn, it can be replenished by winding replacement material off reel 61.

In Figure 3, the upper face of the treatment zones is provided by platens 62, 63 of smooth-surface steel.

In operation, a sheet of impregnated non-woven shoe lining material 52 to be compressed to a thickness of 0.6mm is fed through the heated zone 12 and the cooling zone 14 of the illustrative apparatus at a rate of 2 metres per minute. Heating platens 20,22 measuring 0.4m in length, 1.8m in width and 0.075m in thickness were used and were heated to a temperature of 220°C using heat transfer oil. Cooling platens 34,32 measuring 0.2 in length, 1.8m in width and 0.075m in thickness were used and were kept at a temperature of 15°C using water as the cooling liquid. Whilst in the heated zone heat was transferred from the heating platens 20,22 to the sheet 52 of material to bring the sheet to a heat-softened condition throughout its thickness. As it passed through the heated zone, its thickness was reduced by the tapering heating surfaces 24,26 until it reached the final desired thickness (0.6mm) at outlet 30. It was maintained at this thickness whilst being passed through insulating portion 25 and between cooling platens 32,34 of the cooling zone 14. Heat was removed from the sheet whilst it was in the cooling section so that the temperature of sheet 52 was reduced to a temperature below its softening point.

When pressed sheet 52 emerged from the cooling zone it was sufficiently cool to enable it to be wound on to rollers for storing.

## Claims

1. Apparatus for precision controlling the thickness of a sheet of heat-softenable material 52 by heating the material to bring it to a softened condition, compressing the material while in the softened condition to the desired thickness and cooling the material below its softening point whilst maintaining the desired thickness, wherein said sheet material 52 is passed continuously through a passage through a heated zone 12 wherein the material passing through is softened, the thickness of the softened material being controlled so that it exits from the heated zone at the desired thickness or somewhat less to pass through a cooling zone 14 wherein the material passing through is set whilst precisely maintained at the desired thickness, characterised in that said heated and cooling zones are defined on one side by a single, driven endless belt 16 and on the other side by stationary confining means 18.

2. Apparatus according to claim 1, wherein the stationary confining means 18 takes the form of a second, stationary endless belt 18.

3. Apparatus according to claim 1, wherein the surface of the stationary confining means 18 is provided by a stationary length of support belt material held against plates 20,32 respectively defining the heated zone 12 and the cooling zone 14.

4. Apparatus according to claim 1, wherein the stationary confining means comprises respectively a heated platen 20 defining one surface 24 of the heated zone 12 and a cooling platen 32 defining one surface 36 of the cooling zone 14.

5. Apparatus according to any one of the preceding claims, wherein at least part of the passage through the heated zone 12 is maintained at a depth equal to the thickness at which the material leaves said heated zone.

6. Apparatus according to any one of the preceding claims, wherein at least part of the passage through the heated zone 12 reduces in depth in the direction of travel of the material to compress the material as it passes therethrough.

7. Apparatus according to claim 6, wherein the whole of the passage through the heated zone 12 reduces in depth in the direction of travel of the material to compress the material as it passes therethrough.

8. Apparatus according to any one of the preceding claims, wherein the heated zone 12 is heated to a temperature in the range 80° to 250°C.

9. Apparatus according to any one of the preceding claims, wherein the heated zone 12 is heated to different temperatures on opposite sides of the material.

10. Apparatus according to any one of the preceding claims, wherein the sheet material 52 is forwarded by engagement by the endless belt 16 and passed through a passage between a first pair of plates 29,22 provided with heating means and a second pair of plates 32,34 provided with cooling means, said first pair of plates 20,22 being held rigidly with a separation at the parallel exit edges equal to or somewhat less than the thickness desired for the sheet material and said second pair of plates 32,34 being held rigidly parallel with a separation equal to the desired thickness, whereby in operation said first pair of plates 20,22 define a passage through a heated zone 12 wherein the material 52 passing through is softened and said second pair of plates 32,34 define a passage through a cooling zone 14 wherein the material 52 passing through is set whilst precisely maintained at the desired thickness.

11. Apparatus according to claim 10, wherein said first plates 20,22 are mutually inclined so that the depth of the passage between the plates reduces in the direction of travel of the sheet material whereby the material is compressed as it passes therethrough.

12. Apparatus according to claim 11, wherein the depth of the passage between said first plates 20,22 reduces continuously over the length of the heated zone 12.

13. Apparatus according to claim 11, wherein the depth of the passage between said first plates 20,22 reduces over part only of the length of the heated zone 12.

Fig_1

EP 0 322 145 A2

*FIG_2*

*FIG_3*

EP 0 322 145 A2